Europäisches Patentamt

European Patent Office

Office européen des brevets

(11) Publication number: **0 271 995**
**A2**

## EUROPEAN PATENT APPLICATION

(21) Application number: 87310038.2

(22) Date of filing: **13.11.87**

(51) Int. Cl.4: **G06F 15/72** , G06F 3/033 , G09G 1/16

(30) Priority: **13.12.86 GB 8629832**

(43) Date of publication of application:
**22.06.88 Bulletin 88/25**

(84) Designated Contracting States:
**DE FR GB IT NL**

(71) Applicant: **Quantel Limited**
**Pear Tree Lane**
**Newbury RG13 2LT(GB)**

(72) Inventor: **Catlow, George William**
**Manisty Speen Lane**
**Newbury Berkshire RG13 1RJ(GB)**

(54) Stencils for video graphics systems.

(57) A system is disclosed for automatically generating stencil signals from a characteristic (for example luminance) of stored video image picture point signals. First and second control values are selected, and a first type of stencil signal (for example representing no stencil) is generated for all image signals having a luminance value below the first control value and a second type of stencil signal (for example representing full stencil) is generated for all image signals having a luminance value above the second control value.

*Fig.1.*

## STENCILS FOR VIDEO GRAPHICS SYSTEMS

The invention relates to video graphics apparatus with means for generating stencils. The invention is particularly concerned with video graphics apparatus of the type comprising means for storing video image picture point signals, display means for displaying an image generated from said picture point signals and a stencil store for storing stencil picture point signals wherein said stored picture point signals may represent full stencil, no stencil or one of a plurality of intermediate values.

A video graphics system of the aforesaid type is described in UK Patent number 2089625 and UK Patent application number 2165728 each assigned to the present assignee. In this known system video image picture point signals are stored as digital binary codes representing luminance (Y) and chrominance (U and V); although they could be stored as red, green, blue (RGB) colour signals or CYM subtractive colour signals. The display means is a television type monitor and an operator controlled device is provided, in the form of a touch tablet and a stylus, for identifying positions on the displayed image.

Stencil signals are used to combine a first video signal V1, in the image store, with a second video signal V2. The proportion of each signal (V1 and V2) taken to form a composite signal V3 is determined by the stencil signal S as follows:
$$V3 = (1-S) V1 + SV2$$

For a full stencil S is unity and V1 is totally replaced by V2, when S is 0 (representing no stencil) V1 is unchanged and for intermediate values of S V1 and V2 are blended. Blending is necessary so that images may be combined without introducing discontinuities at their boundaries.

A technique for automatically producing stencils in broadcast quality video graphics systems is known in which the video image data stored as Y, U, V signals and stencil signals are obtained from the luminance (Y) component; the stencil may be modified manually to create the desired stencil pattern.

A problem with the above technique for automatically generating stencil signals is that a whole range of stencil values are produced dependent upon the luminance values. Thus, instead of the desired stencil area being a full stencil and the other parts of the designated area being left blank, except for the image boundaries, it is common for both areas to be covered by a stencil signal in which the desired stencil area is merely covered by a stencil which is slightly harder than that covering the other parts. The generated stencil may therefore require a great deal of manual work and in some cases, particularly when the luminance values of the two areas are very close, the automatic system cannot be used.

A video signal editing system is disclosed in United States Patent No 4667221 (assigned to the present assignee) in which a chroma key signal is generated in response to a characteristic of signals within a selected region. Thus the keying signal is not generated in response to a single colour, such as saturated blue, but to any colour within a volume of colour space. However this system is not suitable for graphic systems of the present type in which three types of stencil signal are required, i.e. no stencil, full stencil and intermediate stencil values.

It is an object of the invention to provide an improved video graphics apparatus.

According to the invention there is provided video graphics apparatus, of the aforesaid type, characterised by processing means responsive to a characteristic of said video image picture point signals including means for selecting a first control value of said characteristic and for selecting a second control value of said characteristic higher than said first control value, means for generating a first type of stencil signal for video image picture point signals having a value of said characteristic below said first control value and for generating a second type of stencil signal for video image picture point signals having a value of said characteristic above said second above said second control value, and means for loading generated first type stencil signals and generated second type stencil signals to the stencil store.

The invention will not be described by way of example only with reference to the accompanying drawing of which:

Figure 1 shows a video graphics system including a control processor;

Figure 2 details part of the control processor shown in Figure 1 arranged to generate stencil signals; and,

Figure 3 shows the output response of the stencil signals generated by the control processor.

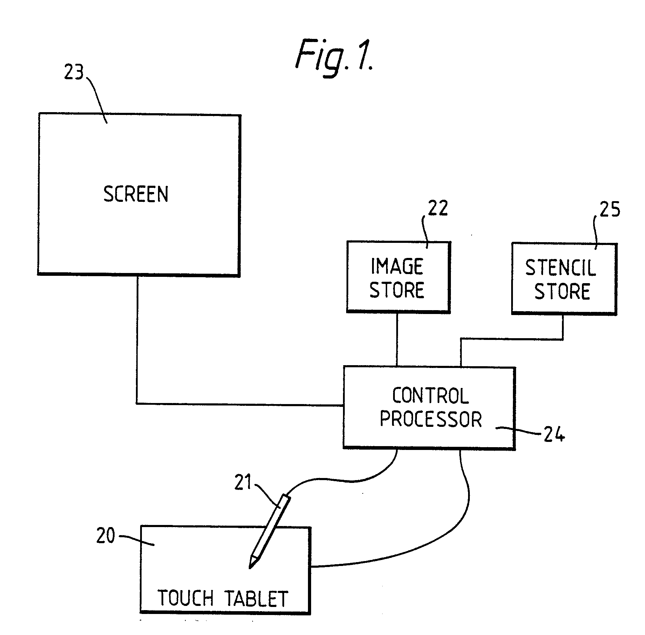

A video graphics system is shown in Figure 1 in which a video image is generated in response to signals form a touch tablet 20 and a stylus 21, stored as digital (binary coded) video image picture point signals in an image store 22 and displayed on a TV type screen 23 under the control of a control processor 24. Stencil signals are automatically generated by the control processor 24 and stored in a stencil store 25. For each picture point signal in the image store a corresponding stencil picture point signal of several bits may be stored in the stencil store, several bits being required to produce stencils with varying degrees of hardness, i.e, representing full stencil, no stencil or one of a plurality of intermediate values.

On entering a 'create stencil' mode the operator is required to designate a stencil area, select a characteristic of the picture from which the stencil will be derived, and select a first control value and a second control value. The stylus and touch tablet are used to designate an area which is identified on the screen by a rectangular outline; the position of said outline being fixed by tapping the stylus onto the touch tablet. For most applications the required characteristic will be luminance, but others may be used as described later. The first and second control values are obtained by identifying colours form the picture itself which are then shown on the screen in a control menu below the image. The identification of the first and second control values does not refer to the order in which they are selected but to their relative values of the charateristic of interest; thus, for the selected characteristic (say luminance), the second selected control value is the one which is higher (brighter) and the first selected control value.

The control processor is arranged to automatically generate stencil signals for all designated video image picture point signals in response to a characteristic of said image signals. However for all designated video image picture point signals having a value of said characteristic below the first control value a first type of stencil signal is generated representing no stencil. Similarly for all designated video image picture point signals having a value of said characteristic above the second control value a second type of stencil is generated representing full stencil. Intermediate values, i.e, image picture point signals for which the value of the characteristic (luminance) is between the two control signals, have stencil signals generated lying in the rang between the first and second types of stencil signal linearly related to the value of their respective image signals. Alternativley the first type of stencil signal may represent full stencil and the second type may represent no stencil, or any intermediate value may be chosen for the first and second types.

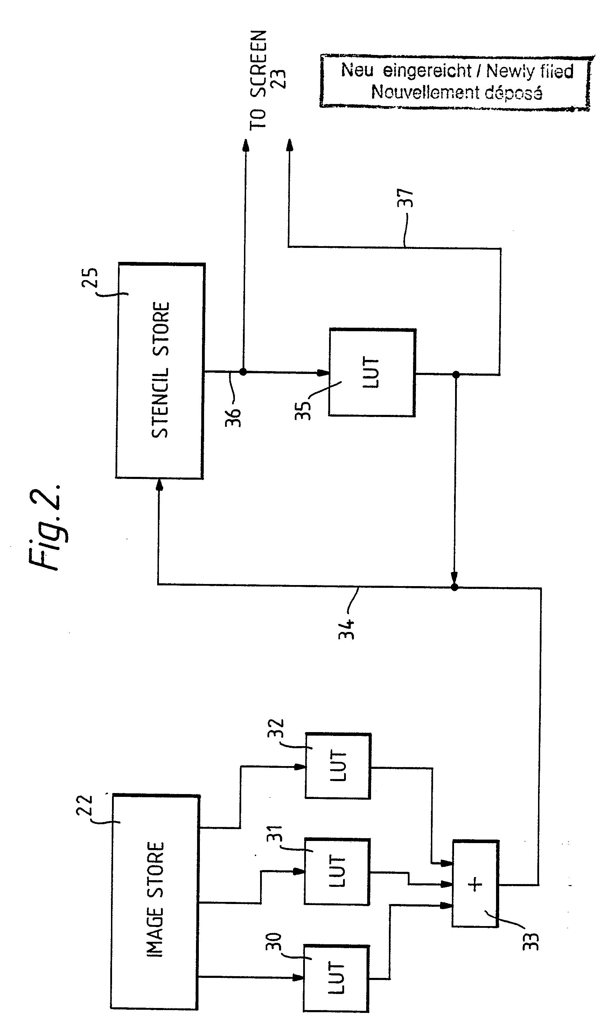

Elements of the control processor 24 used for the automatic generation of stencil signals are shown in Figure 2. In the embodiment of Figure 2 the video image picture point signal is stored as three signals representing the red, green and blue components. All picture points in the designated area of the displayed image are read out of the image store 22 and the components, red, green and blue, and supplied to respective look up tables 30, 31 and 32. The look up tables are programmed such that their combined output represents the value of the desired characteristic. Thus look up tables 31, 32 and 33 may be programmed to produce output values representing the luminance of the video image picture points, although an equal weighting may be given to each colour unlike the Y signal in television signals.

The output from the look up tables 30, 31 and 32 are supplied to a combiner 33 which generates preliminary picture point signals, representing luminance values say, which are supplied to the stencil store 25 over line 34. The output from the stencil store may be supplied to a screen control subsystem within the control processor to display a stencil on the screen in a similar way to that previously known in the art and described above. However, instead of a stencil generated from the luminance of video image picture point signals, other characteristics may be chosen, for example a particular colour, by suitable programming of the look up tables 30, 31 and 32.

Processing of the preliminary signals to produce stencil signals is preformed by a look up table 35. A line 36 supplying control from the stencil store 25 to the screen control subsystem also supplies an input to look up table 35. The look up table is programmed in response to the first and second control values and produces an output which is also supplied to the screen control subsystem on a line 37. The operator may then view the new stencil signals (supplied from look up table 35) and, if necessary adjust the response of the look up table. In doing this operator is effectively adjusting the first and second control values which allows the operator to get the best stencil covering as much of the desired area as possible without covering other areas within the designated region.

Look up tables 30, 31, 32 and 35 consist of random access memory devices in which an output value is stored for all possible input values. A input to the LUT is therefore an address for the memory device and programming the device consists of writing new values to all of the memory locations.

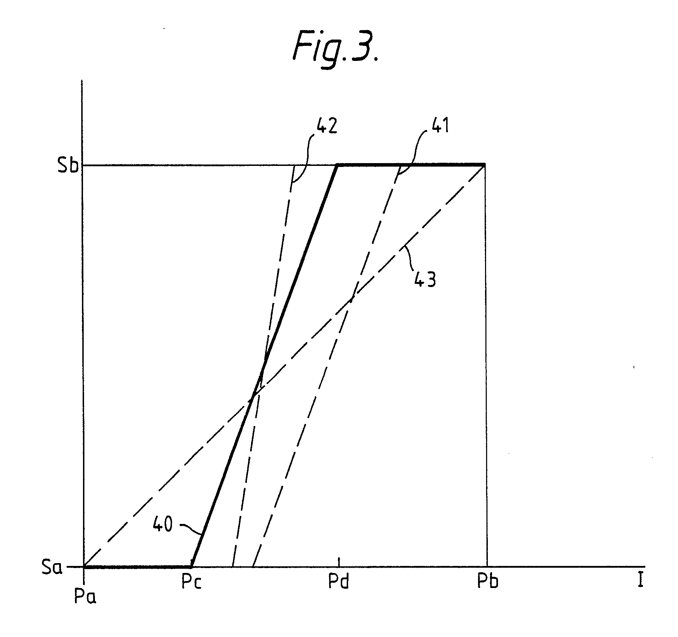

The output response for look up table 35 is shown in Figure 3, identified by reference 40, in which the input signal is the preliminary signal P from the stencil store and the output is the new stencil signal S. The values of input signal are in the range Pa to Pb and output signals are in the range Sa to Sb, where Sa represents no stencil and Sb represents full stencil. The first and second control values may lie anywhere in the range Pa to Pb and in this example have been set to Pc and Pd repectively. The look up table has been programmed so that the first type of stencil signal has a value of Sa (i.e, no stencil) and the second type of stencil signal has a value Sb (i.e, full stencil). Intermediate values Pc to Pd (required for blending) are linearly expanded over the range Sa to Sb.

The two dotted lines 41 and 42 show two types of transformation which may be performed in response to commands from the operator. A shift to position 41 increases the number of stencil picture points representing no stencil while a translation to the left increases the number of stencil picture points representing full stencil. A shift to position 42 sharpens the stencil by minimising the number of stencil picture points having intermediate values. The invention allows an operator to achieve the desired degree of sharpness while retaining enough blending at the edges of combined images. Line 43 is the response obtained in known systems in which look up table 35 is effectively transparent.

As previously stated, once an operator has obtained the required response from look up table 35, then the preliminary values in the stencil store are over written by values from the look up table 35.

In broadcast quality video graphics systems the video image picture point signals include a luminance component. It is therefore possible to incorporate the invention into these systems without look up tables 30 to 32. In a simplified version luminance values are supplied directly to a stencil store via a look up table similar to 35 in Figure 2. In this embodiment it is not necessary to store preliminary values because luminance values are stored in the image store. If the automatically generated stencil is not exactly what an operator requires then the first and/or second control values are re-selected from the displayed image, the look up table re-programmed and new stencil signals generated which are directly supplied to a stencil store.

## Claims

1. Video graphics apparatus including means for automatically generating stencil signals, comprising means (22) for storing video image picture point signals, display means (23) for displaying an image generated from said picture point signals and a stencil store (25) for storing picture point signals, wherein said stencil picture point signals may represent a full stencil, no stencil or one of a pluality of intermediate values; characterised by processing means responsive to a characteristic of said video image picture point signals including means (20, 21) for selecting a first control value of said characteristic and for selecting a second value of said characteristic higher than said first control value, means (30, 31, 32, 33, 35) for for generating a first type of stencil signal for video image picture point signals having a value of said characteristic below said first control vlaue and for generating a second type of stencil signal for video image picture point signals having a value of said characteristic above said second control value, and means (34) for loading generated first type stencil signals and generated second of stencil signals to the stencil store.

2. Video graphics apparatus according to claim 1 characterised in that new intermediate values are loaded to said stencil store (25) for video image picture points having a value of said characteristic between said first control value and said second control value.

3. Video graphics apparatus to claim 2 characterised in that the relationship between intermediate values from the video image and new intermediate values is substantially linear.

4. Video graphics apparatus according to claim 1 characterised in that the processing means includes means (30, 31, 32, 33) for generating preliminary picture point signals representing the value of said characteristic for each designated video image picture point signal, means (34) for loading said preliminary picture point signals to the stencil store (25), and means (35) for generating said first type stencil signals and said second type stencil signals by processing said preliminary picture point signals.

5. Video graphics apparatus according to claim 4 characterised by means (37) for supplying the processed preliminary picture point signals directly to the display means.

6. Video graphics apparatus according to claim 5 characterised in that the first control signal and/or the second control signal are adjustable after the processed preliminary picture point signals have been displayed whereafter the preliminary picture point signals are processed and displayed.

7. Video graphics apparatus according to claim 4 characterised in that processed preliminary signals, having generated first type stencil signals and generated second type stencil signals, are loaded into the stencil store in response to a command form the operator.

8. Video graphics apparatus according to claim 1 including an operator controlled device (20, 21) for selectively designating a stencil region within the displayed image wherein stencil signals are only generated from video image picture points within said designated stencil region.

9. Video graphics apparatus according to claim 8 characterised in that operator controlled device comprises a stylus (21) and touch tablet (20) arranged to identify positions on the displayed video image.

10. Video graphics apparatus according to claim 9 characterised in that the first control value and the second control value are selected by identifying positions of the displayed video image.

*Fig.1.*

SCREEN

IMAGE STORE

STENCIL STORE

CONTROL PROCESSOR

TOUCH TABLET

## Fig.2.

IMAGE STORE (22)

LUT (30) · LUT (31) · LUT (32)

+ (33)

STENCIL STORE (25)

36

LUT (35)

34 · 37

TO SCREEN 23

0 271 995

# Fig.3.